# DEMANDE DE BREVET EUROPEEN

(11) **EP 3 342 288 A1**
(43) Date de publication de la demande: **04.07.2018**
(21) Numéro de dépôt: 16206907.4
(22) Date de dépôt: 27.12.2016
(51) Int. Cl.: A01N 1/02

(54) **NOUVELLE METHODE DE VITRIFICATION EN UNE ETAPE**

(71) Demandeur: Université de Liège, 4031 Angleur (BE)
(72) Inventeur: CONNAN, Delphine, 4000 Liege (BE); ECTORS, Fabien, 4000 Liege (BE); VANDERZWALMEN, Pierre, 4000 Liege (BE); GROBET, Luc, 4000 Liege (BE)

(57) **Abrégé**

Méthode de cryopréservation de matériel biologique comprenant une étape unique d'exposition à une solution vitrifiante enrichie d'au moins un agent cryoprotecteur, pendant une durée limitée préalablement au refroidissement à une température de cryopréservation du matériel biologique .

## Description

L'invention concerne une méthode de cryopréservation de matériau biologique, plus particulièrement une méthode de vitrification de matériel biologique en une étape.

Une méthode de cryopréservation est une méthode de conservation de matériel biologique à très basse température, typiquement 77K ou -196°C, soit la température de l'ébullition de l'azote liquide. On distingue la méthode de congélation lente et la méthode de vitrification.

La méthode de vitrification est une méthode de transformation sans cristallisation, d'un liquide en solide amorphe. Elle permet le refroidissement du matériel biologique et de leur milieu jusqu'à la température de -196°C sans apparition de cristaux de glace intra- ni extracellulaire.

La méthode de cryopréservation, en particulier la méthode de vitrification s'applique généralement à du matériel biologique du type cellules à haute valeur individuelle telles que des cellules souches, des cellules pluripotentes induites, des cellules génétiquement modifiées, des cellules outils utilisées pour des applications telles que screening, diagnostic, études toxicologiques, thérapeutiques comme des vaccins ou applications similaires, mais aussi à des tissus, des organes, des embryons, des gamètes et leurs précurseurs ou tout autre type de matière biologique. L'utilisation de ces cellules à haute valeur individuelle connait un essor considérable dans les domaines de la thérapie régénérative, la thérapie génique, la reproduction médicalement assistée, le diagnostic, la recherche pharmaceutique et la production de vaccins. La cryopréservation de ces cellules est essentielle pour leur stockage, leur transport leur criblage et leur expansion aussi bien dans les domaines de la recherche que des biobanques, d'acteurs industriels ou d'utilisateurs dans les domaines thérapeutiques ou de la reproduction médicalement assistée.

La méthode de cryopréservation doit répondre pour être efficace, à un taux de reprise élevé, une stabilité des caractéristiques biologiques quelque soit la durée de stockage dans le milieu de refroidissement tel l'azote liquide (LN2), être chimiquement et (micro-)biologiquement sûre, aisée à mettre en oeuvre, automatisable et garante d'une sécurité sanitaire optimale. En effet, les efforts de stockage, de transport, de criblage et d'expansion préalable à leur utilisation en dépendent. Les contraintes de qualité et sécurité applicables à la cryopréservation de cellules à visée thérapeutique sont par ailleurs énoncées dans des directives européennes (2004/03/EC; 2006/17/EC; 2006/86/EC).

Le but de toutes les méthodes de cryopréservation et donc aussi les méthodes de vitrification est d'obtenir et de maintenir des conditions intracellulaires compatibles avec l'obtention d'un état amorphe vitreux pendant les étapes de refroidissement et de réchauffement. Jusqu'à ce jour il était admis que la clé du succès dépendait d'un équilibre optimal entre (i) les vitesses de refroidissement et de réchauffement, (ii) la déshydratation cellulaire et (iii) la pénétration de cryoprotecteurs (CPs) dans la matière biologique tel que les cellules ou embryons lors de leur exposition à des solutions hypertoniques de plus en plus concentrées. Lors de la mise en oeuvre de la méthode de vitrification, la solution qui va être soumise à l'étape de refroidissement doit être une solution vitrifiante (VS) c'est-à-dire une solution contenant un mélange de CPs pénétrants et/ou non pénétrants. Le rôle de la VS est d'enrober la matière biologique telle que la cellule, l'embryon ou autre dans une gaine vitrifiante inhibant l'apparition de cristaux de glace extracellulaires. En pratique, la plupart des méthodes de vitrification comprennent plusieurs étapes d'exposition de la matière biologique telles que les cellules ou embryons, constituées de solutions de CPs pénétrants de plus en plus concentrés avant l'exposition finale dans la solution VS. Ainsi Vanderzwalmen et al. dans Human Reproduction de avril 2013 décrit pour les oocytes et les embryons une première série d'expositions à des solutions non-vitrifiantes (nVSi) à concentration croissante en CPs pénétrants (de l'ordre de 3 à 4 M). Ensuite les oocytes et embryons sont exposés à une solution vitrifiante (VS) appelée également solution de vitrification (VS) comprenant une grande concentration de CPs pénétrants (de l'ordre de 5 à 6,5M) et de CPs non pénétrants (de l'ordre de 0,5 à 1M) avant d'être plongés dans l'azote liquide. Il est connu que des concentrations de plus en plus élevées en agents cryoprotecteurs (CPs) lors des étapes d'expositions aux nVSi sont nécessaires pour préparer à un état de vitrification intracellulaire. Par contre, le mélange de CPs pénétrants et non-pénétrants dans VS est responsable de la déshydratation cellulaire finale qui concentre les composants intracellulaires dont les sels, les protéines, les organites, les polysaccharides et éventuellement les CPs qui auraient déjà pénétré dans la cellule au cours des étapes précédentes. Parmi les CP non pénétrants (ou considérés comme tels vu la très faible perméabilité membranaire à leur encontre), on compte par exemple le Ficoll^{®}, le saccharose, le tréhalose, le lactose, le mannitol, le maltose, le mannose et toute molécule appartenant à la famille des di- et trioses ou polysaccharides ou polyalcools ou autres molécules dérivées ou similaires. Parmi les agents cryoprotecteurs pénétrants, on aura par exemple le diméthylsulfoxide (DMSO), l'éthylène glycol(EG), le propylène glycol(PG), le polyéthylène glycol, le triéthylène glycol, le glycerol et autres molécules dérivées ou similaires.

Si la présence de cryoprotecteurs (CPs) est nécessaire, il faut néanmoins admettre que tous les CPs sont potentiellement toxiques et particulièrement les CPs pénétrants. Leur toxicité dépend de la concentration utilisée, de la température comme de la durée d'exposition, de la tonicité du milieu, du mode de contact des cellules avec les produits et enfin du type de cellule. Pour exemple, le diméthylsulfoxyde (DMSO), le glycérol et plus spécialement le propylène glycol (PROH) peuvent former des formaldéhydes potentiellement toxiques par des réactions non enzymatiques. De plus, le DMSO aurait un effet toxique en déstabilisant les protéines membranaires et en déplaçant l'eau liée qui y est associée. Si tout le monde s'accorde à dire que tous les CPs sont toxiques et qu'il serait bénéfique de réduire leur concentration intracellulaire, il n'y a pas réellement de consensus quant à la manière de procéder pour cryopréserver des cellules ou des embryons sans les utiliser.

Nous avons maintenant trouvé une méthode de vitrification dépourvue de la succession des étapes d'exposition aux nVSi propre aux méthodes de vitrification et permettant d'éviter aux cellules et embryons l'exposition progressive à des concentrations de plus en plus importantes de CPs pénétrants et toxiques.

La présente invention concerne en effet une méthode de vitrification en une seule étape avec exposition du matériel biologique pendant une durée limitée dans le temps et avant le refroidissement, à une seule et unique solution (VS) composée d'agents CPs pénétrants et non pénétrants. La durée d'exposition est de préférence inférieure à 90 sec, et plus préférentiellement comprise entre 30 sec et 90sec.

Les agents cryoprotecteurs CPs non-pénétrants sont présents en concentration allant de 10% (v/v) à 60% (v/v), de préférence 60% dans la solution vitrifiante(VS).

Les agents cryoprotecteurs CPs pénétrants sont présents en concentration allant de 5 à 50% (v/v) dans la solution de vitrification(VS), de préférence 20% (v/v).

Du sérum animal ou humain comme l'albumine est également utilisé comme agent cryoprotecteur dans des concentrations faibles allant de 0.1 à 1 % (v/v), de préférence 0,6% dans la solution vitrifiante.

De manière surprenante, cette méthode de vitrification en une étape permet d'obtenir des résultats supérieurs à ceux obtenus avec les méthodes de vitrification courante combinant les expositions successives aux nVSi et à la VS.

Cette méthode présente aussi l'avantage d'éliminer les effets toxiques liés aux expositions prolongées aux CPs.

Le matériel biologique selon l'invention peut être par exemple tout type de cellules ou tissus ou organes ou organisme mono ou pluricellulaire. Dans un mode de réalisation préféré de l'invention, le matériau biologique est un embryon, des cellules embryonnaires ou d'autres cellules apparentées ou dérivées. Le matériel biologique préféré est l'embryon.

Outre la simplification du protocole classique la méthode selon l'invention permet, avant le refroidissement pour la cryopréservation, d'exposer le matériel biologique tels que des embryons à une solution de vitrification unique pendant une période courte , de préférence inférieure à 90 secondes et plus préférentiellement entre 30 sec et 90 sec pour induire une déshydratation optimale sans passer par des solutions intermédiaires (nVSi) habituellement utilisées dans les techniques classiques de vitrification. Dans la méthode de vitrification selon l'invention, la solution hyper osmotique responsable de cette déshydratation rapide permet l'absence d'eau libre intracellulaire et la survie du matériel biologique suite à la vitrification induite par le refroidissement. Dans la méthode selon l'invention, il n'est plus nécessaire d'avoir recours à des agents cryoprotecteurs (CPs) qui entrent dans l'espace intracellulaire, ce qui présente l'avantage d'éliminer les effets toxiques, y compris génotoxiques, connus ou inconnus, à court, moyen ou long terme, liés aux expositions prolongées du milieu intracellulaire aux CPs. Dans la méthode selon l'invention, la vitesse de refroidissement apparaît beaucoup moins critique que dans la méthode classique selon l'état de la technique.

La méthode de cryopréservation selon l'invention comprend préférentiellement les étapes suivantes :
a)mise en contact du matériel biologique avec la solution vitrifiante (VS) hyper osmotique pendant une période limitée dans le temps, de préférence inférieure à 90 sec;
b)dépôt sur support du matériel biologique issu de l'étape a) ;
c)vitrification du matériel biologique sur support issu de l'étape b) dans le milieu de refroidissement qui est de préférence de l'azote liquide.

Le matériel biologique peut ainsi être conservé par exemple dans l'azote liquide comme milieu de refroidissement en condition aseptique ou non aseptique pendant une période illimitée.

Dans le cas d'une vitrification non aseptique, le matériel biologique est déposé sur un support, de préférence en forme de gouttière puis plongé directement dans le milieu de refroidissement qui est de préférence l'azote liquide, après une exposition de courte durée au sein de la solution vitrifiante (VS).

Dans le cas d'une vitrification aseptique le matériel biologique est déposé sur support après exposition à la solution vitrifiante et est introduit dans une paille de protection scellée à une extrémité. La paille de protection est scellée à son autre extrémité lors de sa plongée dans le mileu de refroidissement qui est de préférence l'azote liquide.

Dans un mode de réalisation préféré de l'invention la solution vitrifiante (VS) est préalablement refroidie à une température entre 5 et 1°C, de préférence 4°C avant d'être mise en contact avec le matériel biologique.

Après son séjour dans le mileu de refroidissement tel que l'azote liquide, le matériel biologique est ensuite récupéré par réchauffement jusqu'à la température ambiante.

La méthode selon l'invention comprend également une étape unique de réchauffement brutal du matériel biologique ayant subi l'étape de vitrification. Ce réchauffement brutal au départ de la température de refroidissement comme celle de l'azote liquide, à la température ambiante de l'ordre de 18 à 25°C se fait à une vitesse allant de 10.000 à 30.000 degré par minute et préférentiellement 20.000 degré par minute.

Le réchauffement est effectué en plongeant le matériel biologique dans une solution normotonique telle que qu'une solution de rinçage d'embryons M2 (milieu de lavage selon Quinn, J.Reprod.Fert. 1982, sept :66(1) :161-8).

### Description détaillée de l'invention

L'invention est illustrée ci-après à travers plusieurs exemples qui ne doivent pas s'interpréter comme une limitation de l'invention revendiquée.

### Matériel et méthodes

### 1°Production des Embryons

Des souris consanguines FVB/N ou C57BI/6J (Janvier Labs, France) femelles âgées de 5 semaines ont été superovulées par l'injection de 5 unités internationales (u.i.) de de gonadotropine présente dans le sérum de jument gravide (Pregnant Mare Serum Gonadotrophin, PMSG) en intrapéritonéale (i.p.) suivie 46h plus tard par une injection ip de 5 u.i. de gonadotropine chorionique humaine (human Chorionic Gonadotrophin, hCG). L'injection d'hCG a été suivie immédiatement de l'accouplement des femelles traitées avec des mâles de souche identique. Le lendemain de l'accouplement, les souris présentant un bouchon vaginal ont été euthanasiées par dislocation cervicale et leurs zygotes collectés. Seuls les embryons présentant 2 pronoyaux et un cytoplasme normal ont été inclus dans cette étude. Le développement *in vitro* des zygotes jusqu'au stade de blastocyste (jour 5 du développement *in vitro*) a été réalisé à 38°C, dans des gouttes de 50 µL de milieu de culture pour embryons M16 sous huile (Whittingham, J.Reprod.Fertil Suppl.1971, 14 : 7-21), dans une atmosphère contrôlée de 5% de CO2 et saturée en humidité.

### 2°Utilisation des Embryons

De manière générale, les embryons ont été dispersés aléatoirement en différents groupes. Les embryons développés *in vitro* ont été utilisés aux stades d'une cellule (zygotes ; stade 1), de deux cellules (stades II) et de morulas. Après réchauffement, tous les embryons (sauf ceux utilisés pour les transferts) ont été cultivés *in vitro* jusqu'au stade de blastocyste. Pour la validation de chaque expérience, chaque manipulation comprenait un groupe contrôle non cryopréservé ainsi qu'un groupe vitrifié selon le protocole dit « classique » encore appelé protocole selon l'état de la technique décrit par Vanderzwalmen et al dans Human Reproduction (vol 28, 2101-2110, p 1-10, 2013), en plus des groupes tests. Pour rappel, la vitrification selon le protocole classique consiste à exposer les embryons pendant 2 fois 3 minutes et à température ambiante aux solutions non vitrifiantes 1 et 2 (nVS1 et nVS2), avant de les laver dans de la solution de vitrification (VS) pré-refroidie à 4°C et de les déposer sur leur support. Cette dernière étape n'excède pas 1 minute. Les groupes tests ont été directement exposés à la VS pré-refroidie avant d'être vitrifiés et / ou réchauffés selon différents protocoles comme décrits ci-dessous (dans les exemples 1 à 4). L'évaluation de la survie des embryons est réalisée une heure après le réchauffement, alors que le taux de développement est évalué au 5^{e} jour de la culture *in vitro* par dénombrement des blastocystes obtenus.

### 3°Solutions cryoprotectrices utilisées dans les exemples selon l'invention

Toutes les solutions cryoprotectrices nVSi utilisées dans les exemples sont préparées à partir d'une solution tampon de D-PBS (Sigma D-4031) additionné de 10% de sérum de veau foetal pour culture cellulaire (provenant de sources commerciales (par exemple Fetal Bovine Serum de Gibco^{®}). Les solutions nVS1 et nVS2 utilisées pour le groupe de contrôle sont préparées de manière classique selon l'état de la technique et décrit par Vanderzwalmen et al dans Human Reproduction (vol 28, 2101-2110, p 1-10, 2013). La solution nVS1 contient 5% (v/v) de diméthylsulfoxyde (DMSO) et 5% (v/v) d'éthylène glycol (EG), alors que la solution nVS2 contient 10% (v/v) de DMSO et 10% (v/v) d'EG.

La solution hyper osmotique VS utilisée à la suite des solutions nVSi selon la méthode classique de l'état de la technique, ou isolément dans la méthode selon l'invention est constituée de 20% (v/v) de DMSO, de 20% (v/v) d'EG, de 0,5M de saccharose (Sigma S-1888) et de 25µM de Ficoll (Sigma F-8636). Les solutions de saccharose (S-1888) utilisées sont préparées à partir de tampon D-PBS (Sigma D-4031) additionné de 10% de sérum de veau foetal..

### 4°méthode de vitrification en une étape selon l'invention

Pour la vitrification en une étape, les embryons par groupes de 4 à 6 sont déplacés de leur milieu de culture vers une goutte de VS de 0,5 ml préalablement refroidie à 4°C. Ils y sont déplacés deux à trois fois de manière à les débarrasser de leur gangue de milieu de culture et à les enrober de la solution VS. Après des expositions de durées variables dans la VS (30 ; 90 ; 120 ; 150 et 180 secondes pour l'expérience 1, 30 versus 150 secondes pour les expériences 2 ; 3 et 4b ; 50 secondes pour les expériences 3 et 4b), les embryons sont placés sur la gouttière du support de vitrification : VitriPlug (Vitrimed, Austria) dans le cas des vitrifications non aseptiques (exemples 1, 2, 3, 4a et groupes contrôle), et VitriSafe (Vitrimed, Austria) pour les vitrifications aseptiques (exemples 3 et 4b). Par vitrification aseptique on entend une vitrification sans contact direct du milieu et des embryons avec l'azote liquide. Lors des vitrifications aseptiques, ce support VitriSafe est introduit dans une paille de protection de 0,3 ml (CryoBioSystem) préalablement identifiée, lestée et scellée à une extrémité (il y 2 compartiments dans les pailles de 0,3 ml. Ces 2 compartiments sont séparés par un piston en coton. Le grand compartiment de 0,3 ml est destiné à recevoir le VitriSafe^{®} alors que l'autre est destiné à recevoir un lest (tige en inox enrobée d'un film plastique de couleur) entouré d'une étiquette d'identification). Pendant la plongée dans l'azote liquide, la seconde extrémité de la paille de protection est également scellée. Lors des vitrifications aseptiques aussi bien que non aseptiques, le refroidissement est accéléré en opérant des mouvements tournants dans l'azote liquide afin d'éviter l'effet « Leidenfrost » entrainant une réduction de la vitesse de refroidissement par formation d'une couche gazeuse isolante en périphérie de la paille.

### 5°Étape de réchauffement à la suite de la vitrification selon l'invention

Lors du réchauffement après une vitrification aseptique, et alors que la paille de protection est encore partiellement immergée dans l'azote liquide, l'extrémité scellée correspondant au compartiment où se trouve le VitriSafe^{®} est coupée avec des ciseaux et le VitriSafe en est extrait. Sa gouttière supportant les embryons est plongée directement et immédiatement dans une goutte de 0,5 ml de saccharose 0,5M (groupe contrôle) ou 0,25 M (groupes des exemples 1 et 4a) ou dans du milieu de culture M2 à température ambiante (exemples 2 et 4b). Cette dernière étape de la procédure de réchauffement par immersion est réalisée à température ambiante et est identique lors de l'utilisation des VitriPlug^{®}. Elle est responsable du réchauffement ainsi que de la dilution immédiate de la VS.

### 6°Analyse statistique

Dans tous les exemples, l'analyse statistique a été réalisée selon un modèle linéaire (analyse de variance) à l'aide du logiciel SAS. Seules les différences pour lesquelles la valeur de p est inférieure à 0,05 sont considérées comme significatives.

### Exemples et résultats

### 7°Exemple 1 : Vitrification en une étape selon l'invention d'embryons aux stades I, II et de morulas : effet de la durée d'exposition à la VS

Des embryons sont récoltés au stade d'une cellule (zygote ; stade 1), selon la méthode de production décrite dans « Manipulating the mouse embryo, a laboratory manual » 4th Edition, 2013 Behringer et al, CSH Press. Une partie de ces embryons sera affectée au groupe contrôle non cryopréservé et sert de référence à l'expérience. Toutes les expériences pour lesquelles ce groupe de référence nous a donné un pourcentage de blastocystes inférieur à 90% ont été invalidées. Parmi les groupes d'embryons vitrifiés, un groupe contrôle est traité selon la méthode classique de l'état de la technique décrite dans Vanderzwalmen et al (Human Reproduction, 2013) et cinq autres groupes d'embryons sont exposés directement à la solution de vitrification (VS) décrite au point 3 pendant respectivement 30 sec, 90 sec, 120 sec, 150 sec et 180 sec avant le refroidissement.

Après cela les embryons sont placés par groupes de cinq (+ ou - 1) sur un support non aseptique (provenant de Vitrimed^{®}) et plongés directement dans l'azote liquide pour y être conservés pendant une période prolongée allant généralement de un jour à une semaine.

Lors du réchauffement, tous les groupes, y compris le groupe contrôle vitrifié selon la méthode classique décrite par Vanderzwalmen et al dans Human Reproduction (vol 28, 2101-2110, p 1-10, 2013), mais excepté le groupe contrôle non cryopréservé, sont amenés brutalement à une vitesse de 20.000°C par minute à la température ambiante en les plongeant dans une solution de saccharose (Sigma S-1888) diluée dans du PBS (Sigma D4031) à la concentration de 0,25M. Les groupes d'embryons restent dans cette solution pendant une durée variable allant de 1 à 3 minutes.

Les embryons sont ensuite lavés dans le milieu M2 (milieu de lavage selon Quinn dans J.Reprod.Fert. 1982, sept: 66(1) :161-8) avant d'être mis en culture dans le milieu M16 (Whittingham, dans J.Reprod.Fertil Suppl.1971, 14: 7-21)). Seuls les embryons retrouvés sont pris en compte. Le taux de survie expérimental est calculé après une heure de culture. Par contre, le taux de développement est évalué au jour 5 du développement. Il s'agit du pourcentage de blastocystes obtenu et exprimé par rapport au nombre d'embryons retrouvés après le réchauffement.

La même expérience a ensuite été réalisée avec des embryons récoltés au stade zygote et développés *in vitro* jusqu'au stade de 2 cellules après 24 heures de culture.

La même expérience a ensuite été réalisée avec des embryons récoltés au stade zygote et développés *in vitro* jusqu'au stade morula (+/-16 cellules) après 36 heures de culture.

Les résultats sont repris dans le Tableau 1 qui présente les taux de survie observés une heure après le réchauffement et les pourcentages de blastocystes observés au 5^{ième} jour de développement après vitrification en une étape des zygotes, stades II et des morulas.

Au cours de l'exemple 1, un total de 681 zygotes a été récolté à partir de 46 femelles superovulées.

**Tableau 1 : Taux de survie 1 heure après le réchauffement (T0) et pourcentages de blastocystes observés après vitrification en une étape en fonction du stade de développement (stades zygote, Il et morula) et de la durée d'exposition à la VS. Le réchauffement a été réalisé dans du saccharose 0,25M.**

| | Nb d'embryons | Nb d'embryons retrouvés (R) | % de survie (S) à T0 (S/R) | % de blastocystes (B) à J5 (B/R) | Nb de répliques |
|---|---|---|---|---|---|
| ***Zygotes*** | | | | | |
| **Contrôle** | 18 | 18 | 100,0 (18) | 77,8 (14)^{a} | 2 |
| **Vitrification classique** | 41 | 39 | 87,2 (34) | 61,5 (24) | 4 |
| **VS 30 sec** | 29 | 28 | 89,3 (25) | 71,4 (20) | 3 |
| **VS 90 sec** | 29 | 27 | 96,3 (28) | 63,0 (17) | 3 |
| **VS 120 sec** | 31 | 30 | 86.7 (27) | 36.7 (11) | 4 |
| **VS 150 sec** | 22 | 20 | 80**.**0 **(**18) | 40.0(8) | 3 |
| **VS 180 sec** | 22 | 22 | 86.4 (19) | 27.3 (6)^{b} | 3 |
| *Stades II* | | | | | |
| **Contrôle** | 40 | 40 | 100.0 (40)^{c} | 95,0 (38)^{e} | 3 |
| **Vitrification classique** | 30 | 28 | 92.9 (26) | 67.9 (19) | 4 |
| **VS 30 sec** | 51 | 39 | 79.5 (31) | 51.3 (20) | 5 |
| **VS 90 sec** | 31 | 31 | 77.4 (24) | 61.3 (19) | 4 |
| **VS 120 sec** | 27 | 27 | 96.3 (26) | 63.0(17) | 3 |
| **VS 150 sec** | 26 | 26 | 96.2 (25) | 50.0(13) | 3 |
| **VS 180 sec** | 25 | 25 | 44.0 (11)^{d} | 4.0 (1)^{f} | 3 |
| *Morulas* | | | | | |
| **Contrôle** | 43 | 43 | 100.0 (43)^{g} | 95.3 (41)ⁱ | 4 |
| **Vitrification classique** | 68 | 62 | 91.9 (57) | 87,1 (54) | 7 |
| **VS 30 sec** | 34 | 32 | 100.0 (32) | 84.4 (27) | 5 |
| **VS 90 sec** | 34 | 32 | 81.3 (26) | 62.5 (20) | 4 |
| **VS 120 sec** | 25 | 25 | 80.0 (20) | 68.0(17) | 4 |
| **VS 150 sec** | 27 | 27 | 85.2 (23) | 70.4 (19) | 3 |
| **VS 180 sec** | 28 | 28 | 39.3 (11)^{h} | 0,0 (0)^{j} | 3 |

| | | | | | |
|---|---|---|---|---|---|
| Les valeurs avec des exposants différents sont significativement différentes : a:b = p<0,05; c:d = p<0,02; e:f = p<0,05; g:h = p<0,0005; i:j = p<0,0001. | | | | | |

A l'analyse de cet exemple 1, nous avons observé pour les zygotes que les taux de survie après 1 heure ne sont pas affectés par la durée d'exposition à la VS. Les meilleurs taux de développement en blastocystes sont obtenus avec les durées d'exposition, donc les concentrations intracellulaires en CPs (ICCPs), les plus basses : les groupes 30 et 90 secondes.

Concernant les stades II, les survies après 1 heure chutent avec des expositions de 180 secondes. Les taux de blastocystes obtenus au cinquième jour de culture sont semblables à ceux obtenus pour les zygotes, avec un optimum centré sur 90 secondes d'exposition, et deviennent très faibles avec des expositions de 150 et surtout 180 secondes.

Pour les morulas, de la même manière que pour les stades II, les taux de survie après 1 heure sont excellents jusqu'à 150 secondes, puis chutent drastiquement. Il en va de même pour les pourcentages de blastocystes au 5^{e} jour, pour lesquels l'optimum est centré sur les expositions courtes. Ainsi, de manière surprenante, pour chaque stade étudié, les taux de développement sont les meilleurs pour les durées d'exposition à la VS les plus courtes où ils sont similaires à ceux obtenus dans les groupes témoins après vitrification classique selon l'état de la technique. Cela démontre qu'une déshydratation brutale courte et en une étape selon l'invention induit une vitrification intracellulaire et n'est pas plus délétère qu'une déshydratation par paliers qui est chaque fois suivie d'une entrée de CPs suivis d'eau. Ainsi, la survie des embryons de souris est possible après des expositions à la VS aussi courtes que 30 secondes. Cela signifie également que les embryons survivent à la vitrification malgré une concentration intracellulaire de CPs très faible voire nulle. En effet, les durées d'exposition les plus courtes à la VS (30 secondes) entraînent la déshydratation de la cellule sans permettre l'entrée de CPs ni d'eau, ce qui s'est traduit dans cet exemple par une efficacité supérieure de la vitrification (survie et développement) par rapport aux expositions les plus longues qui permettent l'entrée de CPs suivis d'eau (Vanderzwalmen et al, Human Reproduction, vol 28, 2101-2110, p 1-10, 2013).

### 8°Exemple 2 : Vitrification en une étape des stades I, Il et de morulas: effets de la dilution en une étape de la VS dans du milieu sans saccharose (milieu M2 seul) lors du réchauffement, induisant une réhydratation cytoplasmique instantanée

Lors du processus de vitrification classique selon l'état de la technique (Vanderzwalmen et al, Human Reproduction, vol 28, 2101-2110, p 1-10, 2013), les CPs entrent dans la cellule au cours des différentes expositions aux solutions nVSi qui précèdent l'exposition à la VS et le refroidissement. Lors du réchauffement, les cellules sont exposées à du saccharose, agent osmotiquement actif utilisé pour contrecarrer une entrée brusque et excessive d'eau dans le cytoplasme déshydraté contenant les CPs pénétrants entrés dans la cellule au cours des étapes d'exposition aux nVSi. Lors du processus de réchauffement qui suit une vitrification classique selon l'état de la technique, l'absence de cette solution contenant du saccharose résulte en un éclatement de la cellule suite à une entrée trop brutale et massive d'eau. Cette entré d'eau en excès est uniquement liée à la présence de CPs pénétrants et osmotiquement actifs à l'intérieur de la cellule (Vanderzwalmen et al, Human Reproduction, vol 28, 2101-2110, p 1-10, 2013).

Dans le cas de la vitrification selon l'invention, les embryons ne sont pas exposés aux nVSi. Il ne devrait donc pas y avoir d'entrée de CPs dans le cytoplasme, surtout si la phase de déshydratation liée à l'exposition à la VS est courte. Si cette hypothèse est exacte, en l'absence de CPs intracellulaires, le saccharose ne serait plus nécessaire pour empêcher l'entrée d'eau en excès lors du réchauffement. C'est pour vérifier cette hypothèse que, au cours de l'exemple 2, un réchauffement direct dans du milieu M2 sans saccharose a été effectué.

Comme pour l'exemple 1, des embryons de souris sont vitrifiés aux stades zygote, 2 cellules et morula. Un groupe témoin non cryopréservé sert de référence à l'expérience et des groupes contrôle sont vitrifiés et réchauffés par la méthode de l'état de la technique décrite dans Vanderzwalmen et al (vol 28, 2101-2110, p 1-10, 2013). Deux autres groupes d'embryons (zygotes, stades 2 et morulas) sont vitrifiés selon l'invention par exposition directe à la solution de vitrification (VS) pendant 30 sec ou 150 sec.

Après cela les embryons sont placés par groupes de cinq (+ ou -1) sur un support non aseptique (VitriPlug, provenant de Vitrimed^{®}) et plongés directement dans l'azote liquide pour y être conservés pendant une période prolongée allant généralement de un jour à une semaine.

Lors du réchauffement, le groupe contrôle vitrifié selon l'état de la technique (Vanderzwalmen et al dans Human Reproduction, 2013) est amené brutalement à une vitesse de 20.000°C par minute à la température ambiante en les plongeant dans une solution de saccharose (Sigma S-1888) diluée dans du PBS (Sigma D4031) à la concentration de 0,5M. Ce groupe d'embryons reste dans cette solution pendant une durée variable allant de 1 à 3 minutes avant d'être lavés dans du milieu M2 (milieu de lavage selon Quinn, 1982) et d'être ensuite mis en culture dans du milieu M16 (Whittingham, J.Reprod.Fertil Suppl.1971, 14 : 7-21). Les autres groupes vitrifiés selon l'invention sont également amenés brutalement à une vitesse de 20.000°C par minute à la température ambiante mais cette fois en les plongeant directement dans du milieu M2 (Quinn, 1982) avant d'être mis en culture dans du milieu M16 (Whittingham, J.Reprod.Fertil.Suppl. 1971 jun : 14 :7-21).

Le Tableau 2 présente, pour des zygotes, stades II et des morulas, les taux de survie observés 1 heure après le réchauffement et les pourcentages de blastocystes observés au 5^{ième} jour de développement après vitrification en une étape et réchauffement en une étape dans du milieu sans saccharose.

Un total de 526 zygotes a été récolté à partir de 25 souris et utilisés au cours de l'exemple 2.

**Tableau 2 : Taux de survie après 1 heure (T0) et de blastocystes à J5 après vitrification en une étape et réchauffement / réhydratation immédiate dans du milieu M2 sans saccharose (réchauffement en une étape).**

| | Nb d'embryons | Nb d'embryons retrouvés (R) | % de survie (S) à T0 (S/R) | % de blastocystes (B) à J5 (B/R) | Nb de répliques |
|---|---|---|---|---|---|
| *Zygotes* | | | | | |
| **Contrôle** | 15 | 15 | 100,0 (15) | 93,3 (14) | 1 |
| **Vitrification classique** | 41 | 39 | 87,2 (34) | 61,5 (24)^{b} | 4 |
| **VS 30 sec** | 52 | 48 | 91,7 (44) | 58,3 (28)^{b} | 5 |
| **VS 150 sec** | 62 | 61 | 75,4 (46) | 41,0 (25)^{b} | 4 |
| *Stades II* | | | | | |
| **Contrôle** | 41 | 41 | 100,0 (41) | 100,0 (41) | 2 |
| **Vitrification classique** | 30 | 28 | 92,9 (26) | 67,9 (19) | 4 |
| **VS 30 sec** | 32 | 31 | 96,8 (30) | 80,6 (25) | 3 |
| **VS 150 sec** | 45 | 44 | 72,7 (32) | 63,6 (28) | 3 |
| *Morulas* | | | | | |
| **Contrôle** | 35 | 35 | 100,0 (35)^{a} | 100,0 (35)^{c} | 2 |
| **Vitrification classique** | 68 | 62 | 91,9 (57) | 87,1 (54) | 7 |
| **VS 30 sec** | 53 | 53 | 100,0 (53) | 96,2 (51) | 3 |
| **VS 150 sec** | 52 | 52 | 61,5 (32)^{b} | 46,2 (24)^{d} | 3 |

| | | | | | |
|---|---|---|---|---|---|
| Les valeurs avec des exposants différents sont significativement différentes : a:b = p<0,002 ; b:c = p<0,0005 ; c:d = p<0,0004. | | | | | |

A l'analyse de cet exemple 2, quel que soit le stade de l'embryon lors de la vitrification, le taux de survie à T0 ainsi que le taux de développement en blastocystes après 5 jours sont équivalents voire supérieurs (expositions de 30 secondes à la VS) pour le procédé selon l'invention (vitrification en une étape et réchauffement en une étape sans saccharose) par rapport à la vitrification classique. Il apparaît donc que l'activité osmotique du saccharose lors du réchauffement après vitrification en une étape selon l'invention ne soit pas nécessaire, en particulier pour les expositions courtes à la VS (30 sec). L'immersion brusque dans une solution normotonique (M2) n'entraîne donc pas de mortalité cellulaire suite à leur gonflement. Ce n'est pas le cas lors de la méthode selon l'état de la technique, où un réchauffement direct dans du milieu sans saccharose diminue drastiquement la viabilité de l'embryon, suite à son gonflement trop important (Vanderzwalmen et al, Human Reproduction, vol 28, 2101-2110, p 1-10, 2013).

Notre hypothèse selon laquelle, contrairement à la vitrification suivant l'état de la technique, la vitrification en une étape selon l'invention limite drastiquement voire annule l'entrée de cryoprotecteurs (CPs) dans les cellules se trouve ainsi vérifiée.

Par ailleurs, en conjonction avec l'exemple 1, cette expérience montre que le processus de vitrification en une étape suivi du réchauffement en une étape selon l'invention est au moins aussi efficace que la vitrification selon l'état de la technique en ce qui concerne la viabilité et le développement des cellules, tout en assurant une réduction voire une annulation de leur contenu en cryoprotecteurs (CPs) potentiellement délétères.

### 9°Exemple 3 : Vitrification et réchauffement en une étape : effet de la nature du support : aseptique ou non aseptique.

Les exemples précédents (1 et 2) ont démontré que la vitrification en une étape selon l'invention résulte en des concentrations intracellulaires en cryoprotecteurs (ICCPs) très basses voire nulles.

Un des dogmes de la vitrification intracellulaire selon l'état de la technique est inféré des propriétés de la vitrification des milieux aqueux : moins les CPs sont concentrés dans la cellule, plus les vitesses de refroidissement et de réchauffement doivent être élevées pour générer et maintenir l'état vitreux (Yavin et al., Hum Reprod. 2009 Apr;24(4):797-804).

Au cours de la vitrification en une étape selon l'invention, on s'attend donc à ce qu'une réduction des vitesses de refroidissement et de réchauffement ne permette pas d'accéder ni de conserver l'état vitreux et fasse apparaître des cristaux de glace, délétères pour les cellules.

Le support non aseptique utilisé jusqu'ici dans les exemples 1 et 2 permet le contact direct de l'échantillon biologique avec l'azote liquide. Il en résulte des vitesses de refroidissement de l'ordre de +/- 20.000°C par minute. A l'inverse, le support aseptique ne permet pas le contact direct de l'échantillon biologique avec l'azote liquide puisque le support portant les embryons est placé dans une paille protectrice. Il résulte de la présence de cette paille que la vitesse de refroidissement est ralentie et n'est plus que de +/- 1000°C par minute.

Pour évaluer l'effet de la vitesse de refroidissement sur la vitrification en une étape selon l'invention, nous avons effectué cette dernière avec les deux types de supports, aseptique et non aseptique. Une seule méthode de réchauffement a été utilisée: en une étape et directement dans du milieu M2.

Comme pour les exemples 1 et 2, des zygotes de souris sont récoltés et directement vitrifiés à ce stade. Un groupe témoin non cryopréservé sert de référence et des groupes contrôle sont vitrifiés par la méthode classique de l'état de la technique décrite par Vanderzwalmen et al. (Human Reproduction, vol 28, 2101-2110, p 1-10, 2013). D'autres groupes d'embryons sont exposés directement à la VS pendant 50 sec ou 150 sec.

Après cela les embryons sont placés par groupes de cinq (+ ou - 1) sur soit un support non aseptique (VitriPlug^{®}, provenant de Vitrimed^{®}), soit sur un support aseptique (Vitrisafe^{®}, provenant de Vitrimed^{®}) et plongés directement dans l'azote liquide pour y être conservés pendant une période allant généralement de un jour à une semaine.

Lors du réchauffement, le groupe contrôle vitrifié selon la méthode classique selon l'état de la technique (Vanderzwalmen et al, Human Reproduction, vol 28, 2101-2110, p 1-10, 2013), est amené brutalement à une vitesse de 20.000°C par minute à la température ambiante en les plongeant dans une solution de saccharose (Sigma S-1888) diluée dans du PBS (Sigma D4031) à la concentration de 0,5M. Ce groupe d'embryons reste dans cette solution pendant une durée variable allant de 1 à 3 minutes avant d'être lavés dans du milieu M2 (milieu de lavage selon Quinn, J.Reprod.Fert. 1982, sept :66(1) :161-8) et d'être ensuite mis en culture dans du milieu M16 ((Whittingham, J.Reprod.Fertil Suppl.1971, 14 : 7-21). Les autres groupes sont également amenés brutalement à une vitesse de 20.000°C par minute à la température ambiante mais en les plongeant directement dans du milieu M2 (Quinn, 1982) avant d'être mis en culture dans du milieu M16 (Whittingham, 1971).

Le Tableau 3 présente les taux de survie observés 1 heure après le réchauffement et les pourcentages de blastocystes observés au 5^{ème} jour de développement.

Un total de 405 zygotes a été récolté et utilisé au cours de l'exemple 3. Ils ont été récoltés à partir de 17 souris. Du fait de sa plus grande complexité, la vitrification en conditions aseptiques ne peut être réalisée en moins de 50 secondes, c'est pourquoi cette comparaison est réalisée sur cette période de temps dans les deux groupes « aseptique » et « non aseptique ».

**Tableau 3 : Taux de survie après 1 heure (T0) et de blastocystes à J5 après vitrification de zygotes en une étape sur supports aseptiques et non aseptiques et réchauffement / réhydratation instantanée dans du milieu M2 sans saccharose**

| | Nb d'embryons | Nb d'embryons retrouvés (R) | % de survie (S) à T0 (S/R) | % de blastocystes (B) à J5 (B/R) | Nb de répliques |
|---|---|---|---|---|---|
| *Zygotes* | | | | | |
| **Contrôle** | 15 | 15 | 100,0 (15) | 93,3 (14)^{a} | 1 |
| **Vitrification classique** | 41 | 39 | 87,2 (34) | 61,5 (24) | 4 |
| **VS 50 sec aseptique** | 57 | 49 | 83,7 (41) | 73 5 (36)^{c} | 3 |
| **VS 50 sec** | 52 | 48 | 91,7(44) | 58,3 (28) | 5 |
| **NON-aseptique** | | | | | |
| **VS 150 sec aseptique** | 121 | 110 | 72,7 (80) | 23,6 (26)^{b} | 3 |
| **VS 150 sec NON-aseptique** | 62 | 61 | 75,4 (46) | 41,0(25) | 4 |

| | | | | | |
|---|---|---|---|---|---|
| Les valeurs avec des exposants différents sont significativement différentes : a:b = p<0,02 ; b:c = p<0,02. | | | | | |

Aucune différence significative n'est observée entre les groupes non aseptique et aseptique. Lors d'exposition courte (50 sec) à la VS, les deux types de conteneurs donnent des résultats très semblables et comparables à la vitrification selon l'état de la technique. Pour les deux conditionnements, les expositions plus longues (150 secondes) ont tendance à diminuer le développement en blastocyste, et de manière plus nette pour le support aseptique.

Cet exemple montre encore que lors de la vitrification selon l'invention, ce n'est pas la présence intracellulaire de CPs qui est liée à la vitrification intracellulaire. En effet, les durées d'exposition les plus courtes à la VS (50 secondes) entraînent la déshydratation de la cellule sans permettre l'entrée de CPs ni d'eau (Vanderzwalmen et al, 2013), ce qui s'est traduit dans les exemples précédents (1 et 2) par une efficacité supérieure (survie et développement) par rapport aux expositions les plus longues qui permettent l'entrée de CPs et d'eau (Vanderzwalmen et al., 2013).

Il est communément admis lors de la vitrification selon l'état de la technique, que la réduction de la vitesse de refroidissement (par exemple liée à l'utilisation de supports aseptiques) va de pair avec la nécessité d'une concentration intracellulaire en cryoprotecteurs (ICCP) plus élevée. Selon ce principe, vu les ICCPs faibles ou nulles induites par la vitrification selon l'invention, on devrait observer une diminution de la survie des embryons avec les supports aseptiques (qui diminuent considérablement la vitesse de refroidissement). Or, dans les conditions de l'invention où l'ICCP est virtuellement nulle (exposition de 50 secondes), nos résultats ne montrent pas cette diminution de la survie avec les supports aseptiques.

En conclusion, au cours de la vitrification selon l'invention, et lors d'expositions courtes (30 à 50 secondes) à la VS, l'état de déshydratation atteint par les cellules est tel que la vitesse de refroidissement est moins importante pour atteindre et maintenir l'état vitreux qu'au cours de la vitrification selon l'état de la technique. En cas d'exposition plus longue à la VS (150 secondes) permettant l'entrée de CPs et d'eau dans la cellule après le processus initial de déshydratation (Vanderzwalmen et al, Human Reproduction, vol 28, 2101-2110, p 1-10, 2013), la relation entre l'ICCP et la vitesse de refroidissement pour atteindre l'état vitreux se rétablit, comme suggéré par l'efficacité qui tend à diminuer lorsque le support aseptique est utilisé.

### 10°Exemple 4 : Utilisation du transfert de zygotes dans des souris receveuses pseudogestantes pour confirmer la compétence des embryons à donner des souriceaux après la vitrification en une étape selon l'invention

### Exemple 4a : Vitrification non aseptique : effets de la durée d'exposition à la VS sur le % de naissances après transferts

La naissance de jeunes après transferts d'embryons vitrifiés en une étape est la preuve ultime de l'absence de toxicité de la méthode.
(i) Dans ce cadre, des zygotes récoltés et vitrifiés à ce stade après exposition à la VS pendant 30 et 150 secondes ont été transférés dans l'oviducte de souris receveuses pseudogestantes selon le protocole décrit dans « Manipulating the mouse embryo, a laboratory manual » 4th Edition, 2013 Behringer et al, CSHL Press.

Le Tableau 4 présente les pourcentages de naissances obtenus. Des groupes de 154 et 103 zygotes ont été vitrifiés selon le protocole de vitrification non aseptique en une étape et des expositions à la VS de respectivement 30 et 150 secondes ; après réchauffement dans du saccharose 0,25M, 142 et 53 d'entre eux ont été transférés le même jour dans des souris receveuses pseudogestantes.

**Tableau 4 : Pourcentages de jeunes après transferts de zygotes vitrifiés selon le protocole de vitrification non aseptique en une étape et des expositions à la VS de respectivement 30 et 150 secondes ; le réchauffement a été effectué dans du saccharose 0,25M.**

| | Nb d'embryons transférés | Nb de receveuses | % de naissances (n) | Nb moyen de jeunes par receveuse | Nb de répliques |
|---|---|---|---|---|---|
| *Zygotes* | | | | | |
| **VS 30 sec NON aseptique** | 142 | 5 | 21,8 (31) | 5,2 | 3 |
| **VS 150 sec NON aseptique** | 53 | 2 | 22,6(12) | 6,0 | 2 |

Aucune différence significative dans le taux de naissance n'a pu être détectée entre les deux durées d'exposition à la VS, ce qui n'est pas étonnant compte tenu de la complexité de l'ensemble du processus et de l'efficacité aléatoire des transferts. Néanmoins, les pourcentages de naissances sont tout à fait comparables à ceux obtenus en routine dans des conditions similaires lors de réimplantations d'embryons vitrifiés selon l'état de la technique (20,9% ; 138 nés/658 transférés ; F. Ectors, données non montrées). La vitrification selon l'invention conserve donc les propriétés biologiques des cellules et est tout à fait compatible avec le développement normal jusqu'à la naissance.

### Exemple 4b : Pourcentages de naissances après transferts de zygotes ayant subi la vitrification aseptique en une étape (exposition à la VS de 50 sec) et la réhydratation instantanée en M2.

Le Tableau 5 présente les pourcentages de naissances obtenus. Un groupe de 52 zygotes a été vitrifié selon le protocole de vitrification aseptique en une étape avec exposition à la VS de 50 secondes; le réchauffement a été effectué directement dans du M2 (milieu de lavage selon Quinn, J.Reprod.Fert. 1982, sept :66(1) :161-8). Tous les embryons ont été transférés le même jour dans 2 receveuses pseudogestantes.

**Tableau 5: Pourcentages de jeunes après transferts de zygotes vitrifiés selon le protocole de vitrification aseptique en une étape et des expositions à la VS de 50 secondes ; le réchauffement a été effectué directement dans du M2, induisant une réhydratation instantanée.**

| | **Nb d'embryons transférés** | **Nb de receveuses** | **% de naissances (n)** | **Nb moyen de jeunes par receveuse** | **Nb de répliques** |
|---|---|---|---|---|---|
| *Zygotes* | | | | | |
| **VS 50 sec aseptique** | 52 | 2 | 34,6 (18) | 9,0 | 1 |

Les pourcentages de naissances sont ici aussi comparables à ceux obtenus en routine (20,9% ; F.Ectors, données non montrées) lors de réimplantations d'embryons vitrifiés selon l'état de la technique.

Conjointement, les exemples 4a et 4b (Tableaux 4 et 5) confirment que la vitrification en une étape selon l'invention suivie ou non d'un réchauffement direct en milieu M2 (milieu de lavage selon Quinn, J.Reprod.Fert. 1982, sept :66(1) :161-8), en conditions aseptiques ou non, n'altère pas la compétence des zygotes à assurer une gestation normale après transferts dans une receveuse.

### 11° Discussion et Conclusions

Au cours du développement embryonnaire préimplantatoire, plus un embryon se divise, plus ses cellules sont petites, et plus son rapport surface/volume est élevé, ce qui permet des échanges transmembranaires plus rapides. De plus, la perméabilité membranaire augmente du fait de l'apparition de nouvelles aquaporines. Remarquons que les cellules présentes au stade morula (+/-16 cellules) ont un rapport surface/volume et des propriétés biologiques générales (physiologie) tout à fait comparable à la plupart des autres cellules de mammifères. Lors de l'exposition en une étape des blastomères à la solution de vitrification (VS) selon l'invention, une plus petite cellule atteint plus rapidement son niveau de déshydratation maximal. Ensuite, les cryoprotecteurs (CPs) pénétrants présents dans les solutions cryoprotectrices peuvent entrer, suivis par l'eau. Le Tableau 1 montre une diminution du développement à J5 pour des expositions à la VS de 150 et 180 sec, plus particulièrement pour les stades plus avancés avec des cellules plus petites (morulas). Si les cellules survivent à la vitrification selon l'invention après une exposition courte à la VS, alors qu'il y a encore très peu (voire pas du tout) de CPs dans son cytoplasme (voir Tableaux 1 et 3), cela confirme que leur survie (et donc la qualité de la vitrification) n'est pas ou est peu conditionnée par l'entrée de CPs. Nos résultats, montrant la grande efficacité d'une exposition courte à la VS, suggèrent qu'une absence de cristallisation prévaut dans ces conditions de vitrification selon l'invention. L'état vitrifié y est très probablement obtenu et maintenu tant au cours du refroidissement que du réchauffement, et ceci malgré une ICCP faible ou nulle. Après 30 secondes d'exposition à la VS,Ia concentration intracellulaire en cryoprotecteurs (ICCP) ne peut en effet qu'être très faible voire nulle. En effet, les durées d'exposition les plus courtes à la VS (30 secondes) entraînent la déshydratation de la cellule sans permettre l'entrée de CPs ni d'eau, ce qui s'est traduit dans cet exemple par une efficacité supérieure de la vitrification (survie et développement) par rapport aux expositions les plus longues qui permettent l'entrée de CPs suivis d'eau (Vanderzwalmen et al, Human Reproduction, vol 28, 2101-2110, p 1-10, 2013). Cette très faible pénétration transmembranaire des CPs est encore diminuée le pré-refroidissement à 4°C de la VS avant l'exposition des embryons.

Au cours de l'exemple 2 (vitrification en une étape et réchauffement direct en M2 entrainant une réhydratation instantanée; Tableau 2), nous avons renforcé l'hypothèse de la (quasi-)absence de CPs intracellulaires au regard des bons taux de survie observés malgré un réchauffement direct dans une solution normotonique (le milieu M2- milieu de lavage selon Quinn, J.Reprod.Fert. 1982, sept :66(1) :161-8 - sans saccharose). Il apparaît en effet que l'activité osmotique additionnelle du saccharose lors du réchauffement après vitrification en une étape selon l'invention n'est pas nécessaire, en particulier pour les expositions courtes à la VS (30 sec). L'immersion brutale des cellules dans une solution normotonique (M2, milieu de lavage selon Quinn, J.Reprod.Fert. 1982, sept :66(1) :161-8) n'entraîne donc pas de mortalité cellulaire suite à leur gonflement d'origine osmotique, qui n'entraîne donc pas une augmentation anormale de leur volume. Ce n'est pas le cas lors de la méthode selon l'état de la technique, où un réchauffement direct dans du milieu M2 sans saccharose diminue drastiquement la viabilité de l'embryon, suite à son gonflement trop important (Vanderzwalmen et al, Human Reproduction, vol 28, 2101-2110, p 1-10, 2013).

Notre hypothèse selon laquelle, contrairement à la vitrification suivant l'état de la technique, la vitrification en une étape selon l'invention limite drastiquement voire annule l'entrée de CPs dans les cellules se trouve ainsi vérifiée.

Par ailleurs, en conjonction avec l'expérience 1, cette expérience 2 montre que le processus de vitrification en une étape/réchauffement en une étape selon l'invention est au moins aussi efficace que la vitrification selon l'état de la technique en ce qui concerne la viabilité et le développement des cellules, tout en assurant une réduction voire une annulation de leur contenu en CPs potentiellement délétères à court, moyen ou long terme.

L'exemple 3, où des supports aseptiques et non aseptiques sont utilisés permet d'évaluer l'effet de la vitesse de refroidissement au cours de la vitrification selon l'invention. Les résultats obtenus sont inattendus en ceci qu'ils ne correspondent pas à ce qui est observé lors de vitrification selon l'état de la technique, où la vitesse de refroidissement est critique pour éviter la cristallisation. Il est en effet communément admis lors de la vitrification selon l'état de la technique, que la réduction de la vitesse de refroidissement (par exemple liée à l'utilisation de supports aseptiques) va de pair avec la nécessité d'une ICCP plus élevée. Dans l'exemple 3 par contre, aucune différence significative n'est observée entre les groupes non aseptique et aseptique, qui permettent des vitesses de refroidissement très différentes (+/-20.000 °C par minute pour le support non aseptique vs +/- 1000°C par minute pour l'aseptique). En effet, lors d'expositions courtes (50 sec) à la VS, les deux types de conteneurs donnent des résultats très semblables et comparables à la vitrification selon l'état de la technique. Pour les deux conditionnements, les expositions plus longues (150 secondes) ont tendance à diminuer le développement en blastocyste, mais de manière plus nette pour le support aseptique. Selon les principes communément admis, vu les concentrations intracellulaires en cryoprotecteurs (ICCPs) faibles ou nulles induites par la vitrification selon l'invention, on devrait observer une diminution de la survie des embryons avec les supports aseptiques (qui diminuent considérablement la vitesse de refroidissement). Or, dans les conditions de l'invention où l'ICCP est virtuellement nulle (exposition de 50 secondes), nos résultats ne montrent pas cette diminution de la survie avec les supports aseptiques. Ce troisième exemple fait apparaître qu'au cours de la vitrification selon l'invention, et lors d'expositions courtes (30 à 50 secondes) à la VS, l'état de déshydratation atteint par les cellules est tel que la vitesse de refroidissement est moins importante pour atteindre et maintenir l'état vitreux qu'au cours de la vitrification selon l'état de la technique. En cas d'exposition plus longue à la VS (150 secondes) permettant l'entrée de CPs suivis d'eau dans la cellule après le processus initial de déshydratation (Vanderzwalmen et al, Human Reproduction, vol 28, 2101-2110, p 1-10, 2013), la relation entre l'ICCP et la vitesse de refroidissement pour atteindre l'état vitreux se rétablit, comme suggéré par l'efficacité qui tend à diminuer lorsque le support aseptique est utilisé.

Nos conclusions concernant l'efficacité et l'innocuité d'une vitrification selon l'invention avec exposition courte à la VS avant refroidissement et dilution directe en milieu de lavage M2 sont encore renforcées par les taux de naissances obtenus après transferts (Tableaux 4 et 5). Les pourcentages moyens de souriceaux obtenus en routine après transferts de zygotes non cryopréservés et vitrifiés selon l'état de la technique sont respectivement de 20,2 % et 20,9% (F. Ectors, résultats non montrés). Conjointement, les exemples 4a et 4b montrent des efficacités comparables de la vitrification selon l'invention qui n'altère pas la compétence des zygotes à assurer une gestation normale après transferts dans une receveuse.

Ceci démontre que tant la déshydratation que la réhydratation instantanées précédant et suivant respectivement le refroidissement et le réchauffement lors d'une vitrification en une étape selon l'invention ne sont pas délétères aux différents stades de développement.

A la vue de nos résultats obtenus *in vitro* mais également après transferts d'embryons , nous pensons pouvoir affirmer qu'après exposition des embryons pendant 30 sec à la VS, c'est-à-dire au moment correspondant à la déshydratation cellulaire maximale (Vanderzwalmen et al, Human Reproduction, vol 28, 2101-2110, p 1-10, 2013), la vitrification (et donc la viabilité) n'est pas liée à la présence de CPs dans la cellule mais bien due à l'absence d'eau osmotiquement active, encore appelée eau libre ou vicinale.

Ainsi, la déshydratation cellulaire liée à l'exposition à la VS pendant une durée aussi courte que 30 secondes à 4°C ne permet pas l'entrée de CPs, mais est suffisante pour déshydrater la cellule et l'amener à des conditions compatibles avec sa survie lors des différentes étapes de la vitrification. Il semble que la présence de protéines, de sels, de macromolécules, d'organites et de polysaccharides au sein de la cellule permette, lorsque celle-ci est suffisamment déshydratée, de former un état solide vitreux lors du refroidissement par augmentation à l'infini de la viscosité intracellulaire. Il y aurait donc deux types d'états vitreux impliqués dans nos expériences : (i) un état vitreux intracellulaire lié à l'absence d'eau vicinale associée à la transformation du gel cytoplasmique en un solide vitreux lors du refroidissement, et (ii) un état vitreux du milieu extracellulaire moins concentré en macromolécules et polysaccharides et où la solidification amorphe de l'eau exige la présence de CPs à concentrations élevées. Cela démontre que pour autant que les conditions d'une vitrification extracellulaire soient respectées, et que la déshydratation cellulaire soit suffisante, la présence de CPs intracellulaires n'est pas indispensable à la survie cellulaire au cours de l'ensemble du processus de vitrification.

Les exemples et validations de la vitrification selon l'invention ont été effectués sur des embryons au stade zygote et au stade morula. Rappelons que les cellules présentes au stade morula (+/-16 cellules) ont un rapport surface/volume et des propriétés biologiques générales (physiologie) tout à fait comparable à la plupart des autres cellules de mammifères, ce qui permet l'extrapolation des résultats à ces autres types de cellules.

En conclusion, la vitrification selon l'invention repose sur une approche inédite faisant intervenir une déshydratation cellulaire éliminant l'eau libre sans pénétration de CPs. Outre une simplification méthodologique sans altération de l'efficacité par rapport au protocole classique selon l'état de la technique, elle présente l'avantage d'éliminer les effets toxiques, y compris génotoxiques, connus ou inconnus, à court, moyen ou long terme, liés aux expositions prolongées du milieu intracellulaire aux CPs.

## Revendications

**1.** Méthode de cryopréservation de matériel biologique comprenant une étape unique d'exposition à une solution vitrifiante hyperosmotique enrichie d'au moins un agent cryoprotecteur, pendant une durée limitée et préalablement au refroidissement à une température de cryopréservation du matériel biologique.

**2.** Méthode selon la revendication 1 **caractérisée en ce que** le matériel biologique est un embryon.

**3.** Méthode selon la revendication 1 **caractérisée en ce que** le matériel biologique comprend des cellules embryonnaires ou autres cellules apparentées ou dérivées.

**4.** Méthode selon l'une quelconque des revendications 1 à 3 **caractérisée en ce que** la solution hyperosmotique vitrifiante comprend un dérivé polysaccharide en présence de saccharose.

**5.** Méthode selon l'une quelconque des revendications 1 à 4 **caractérisée en ce que** l'agent cryoprotecteur est un mélange de diméthylsulfoxyde (DMSO) et d'éthylène glycol

**6.** Méthode selon la revendication 5 **caractérisée en ce que** le ratio DMSO/Ethylène glycol est 50:50.

**7.** Méthode selon l'une quelconque des revendications 1 à 6 **caractérisée en ce que** la solution vitrifiante comprend également du sérum animal ou humain comme agent cryoprotecteur.

**8.** Méthode selon l'une quelconque des revendications 1 à 7 comprenant plus particulièrement les étapes suivantes :
a) mise en contact du matériel biologique avec une solution vitrifiante hyper osmotique pendant une durée limitée;
b) dépôt du matériel biologique issu de l'étape a)sur un support ;
c)vitrification du matériel biologique déposé sur support dans le milieu de refroidissement.

**9.** méthode selon la revendication 8 **caractérisé en ce que** matériel biologique déposé sur support est introduit dans une paillette scellée à une extrémité avant d'être plongé dans le milieu de refroidissement.

**10.** Méthode selon l'une quelconque des revendications 1 à 9 **caractérisée en ce que** la durée limitée est inférieure à 90 sec.

**11.** Méthode selon l'une quelconque des revendications 1 à 10 **caractérisée en ce que** le milieu de refroidissement est l'azote liquide.

**12.** Méthode selon l'une quelconque des revendications 1 à 11 **caractérisée en ce que** la solution vitrifiante est préalablement refroidie à une température entre 5 et 1°C, de préférence 4°C avant d'être mise en contact avec le matériel biologique.

**13.** Méthode selon l'une quelconque des revendications 1 à 12 comprenant également une étape unique de réchauffement brutal dans une solution normotonique à la température ambiante, du matériau biologique issu de la vitrification.

**14.** Méthode selon la revendication 13 **caractérisée en ce que** le réchauffement brutal se fait à une vitesse à 20.000°C par minute.
